# EUROPEAN PATENT APPLICATION

(11) **EP 4 703 304 A1**
(43) Date of publication of application: **04.03.2026**
(21) Application number: 25196490.4
(22) Date of filing: 18.08.2025
(51) Int. Cl.: B65G 49/06, C03B 33/03, C03B 33/033, C03B 33/037, C03B 33/07

(54) **APPARATUS AND METHOD FOR CUTTING SHEETS**

(30) Priority: 26.08.2024 IT 202400019213
(71) Applicant: Forel Spa, 31056 Roncade (TV) (IT)
(72) Inventor: Vianello, Fortunato, 31056 Roncade (TV) (IT); Vianello, Riccardo, 31056 Roncade (TV) (IT)
(74) Representative: Petraz, Gilberto Luigi

(57) **Abstract**

Apparatus and method for cutting sheets of glass, or other glass substitute materials, to produce sheets or panels, for example for the construction sector, the furniture sector, the naval sector, the transport sector or the industrial sector.

## Description

### FIELD OF THE INVENTION

The embodiments described here concern an apparatus and method for cutting sheets, for example made of glass or other glass substitute materials, including polymer-based ones. In particular, but not limited to, the embodiments described here can be used for cutting sheets of laminated glass, consisting of two sheets of glass coupled together by means of one or more sheets of plastic material interposed between them.

The embodiments described here can be applied, for example, but not limited to, in the production of sheets or panels, made of glass or glass substitutes, in size formats suitable for: the construction sector, both residential and commercial, for example insulating glass, glass walls and balustrades; the furniture sector, for example furniture parts, shower enclosures and other; the naval sector, for example balustrades and balconies; the transportation sector, for example windows or front screens for automobiles, buses, trucks and trains; or the industrial sector.

### BACKGROUND OF THE INVENTION

Apparatuses and methods for cutting laminated glass to produce sheets or panels of desired sizes are known. However, all can be improved at least with regards to productivity.

Laminated glass sheets usually consist of two glass sheets coupled by means of a film of intermediate plastic material, and are generally produced in the standard format of 6 m x 3.3 m, and sold in this format to so-called processing companies, which deal with cutting the sheet into the formats useful for the desired application. A series of glass panels of smaller sizes are thus obtained from a sheet of large sizes.

Generally, the cutting of laminated glass proceeds according to the following steps:
- scoring on both sheets that constitute the laminated glass sheet, along a line that crosses the sheet from side to side;
- snapping of both sheets that constitute the laminated glass sheet by applying a mechanical stress in the scoring zone, thus obtaining two sections, still joined by the film of intermediate plastic material;
- heating of the film of plastic material in order to soften it and simultaneously move the sections away from each other;
- separation of the two panels by cutting the film of plastic material with a blade.

Typically, known apparatuses for cutting laminated glass sheets comprise:
- a loading zone suitable to support the glass sheet and provided with means for translating it in a longitudinal working direction L;
- a cutting zone which, in addition to supporting the sheet and including means for its translation, comprises a cutting bridge disposed so as to perform a cut in the cutting direction T, transverse with respect to the working direction L, suitable to perform the cutting steps described above;
- a device for rotating the sheet, to rotate it by 90° with respect to an axis perpendicular to its rest plane. There are also translation means in this zone to move the sheet toward the next unloading zone, and a positioning device to position the sheet in the cutting zone;
- an unloading zone.

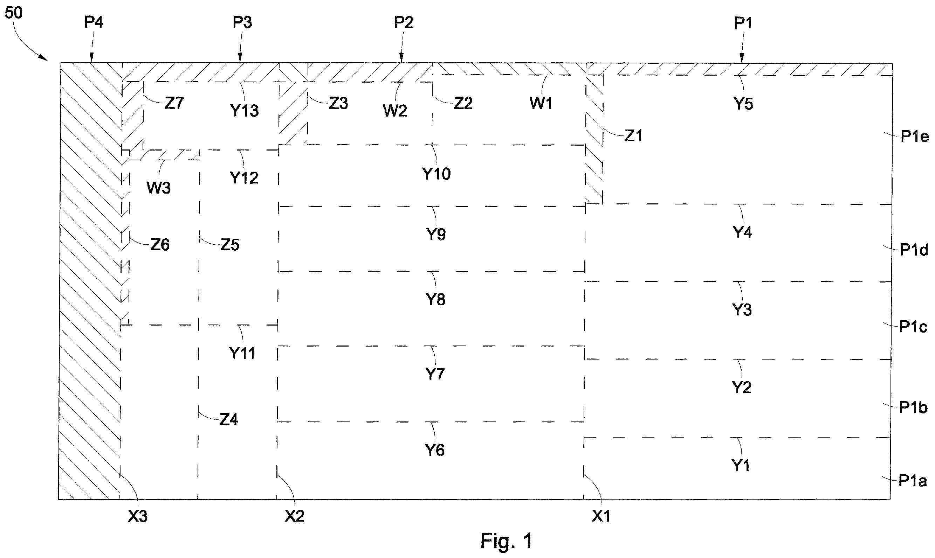

Fig. 1 is a schematic plan view of an example of a glass sheet 50 divided by dashed lines to highlight the panels to be obtained therefrom. Specific software programs are responsible for defining, based on the sizes of the panels to be obtained, their best disposition and thus optimize the cutting operations by reducing inevitable offcuts. The result of this software processing, as shown in fig. 1, is called the "cutting pattern".

The cutting of laminated glass, in order not to produce defects based on current technology, can be carried out by separating the sheet along segments that join two edges. These segments usually have a rectilinear shape, so as to facilitate their separation using automatic means.

According to what described above, a cutting sequence can for example unfold as follows:
- the sheet is made to advance toward the cutting bridge until its cutting line is in correspondence with the dashed segment indicated with X1 in fig. 1 and parallel to it, and the cut is performed in this direction;
- the intermediate panel indicated with P1 thus obtained proceeds toward the rotation device;
- the sheet section consisting of the panels P2, P3 and P4 still joined together returns back toward the loading zone so as to free the cutting zone;

- the intermediate panel P1 is rotated by 90° and translated toward the cutting bridge; at this point, the segments indicated with Y1, Y2, Y3, Y4 and Y5 are parallel to the cutting bridge and therefore to the cutting direction;
- the apparatus performs the cuts along Y1, Y2, Y3 and Y4, thus obtaining the finished panels P1a, P1b, P1c and P1d, which can then proceed toward the unloading zone. The intermediate panel P1e is obtained with the next cut along the segment Y5;
- the panel P1e returns to the rotation device where it is suitably rotated by 90° and translated again toward the cutting bridge;
- by cutting along the segment designated Z1, another finished panel and an offcut are obtained (indicated in fig. 1 with a hatch).

Similarly, subsequent cutting operations, translations and rotations follow, until all the panels are obtained, as indicated in fig. 1. As described above, in the jargon of the technical field in question, the cuts made without performing any rotation of the starting sheet (primary cuts) are identified with X, subsequently, with each rotation, the cutting lines made on the panels thus obtained are designated Y, Z and also W, respectively, and subsequent letters when necessary.

Summarizing, in the example of fig. 1, the apparatus performs, for example, 3 cuts indicated with X (X1, X2 and X3), 13 cuts indicated with Y (Y1, Y2, ..., Y13), 7 cuts indicated with Z (Z1, Z2, ..., Z7) and 3 cuts indicated with W (W1, W2 and W3).

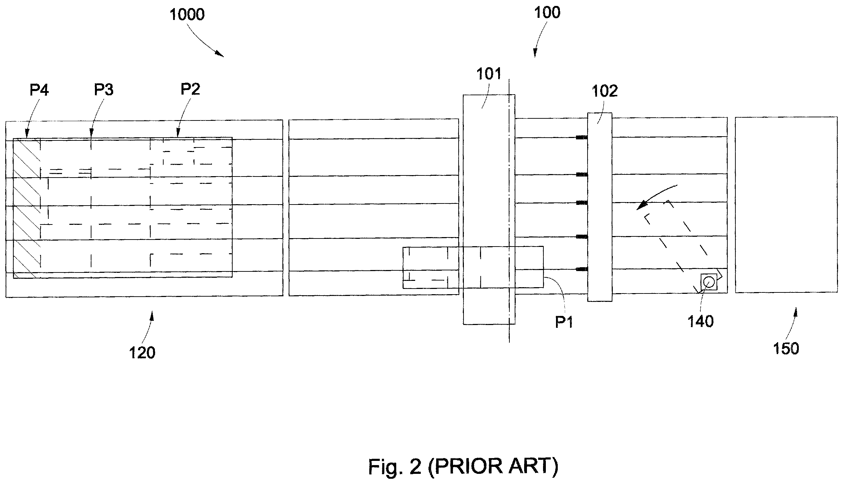

Fig. 2 shows a plan view of an apparatus 1000 for cutting laminated glass, in this example case in a horizontal configuration, meaning that the apparatus is constructed so as to have the translation, rotation and cutting planes, which support the sheet during working, in a horizontal position. In this way, the sheet, with respect to its larger surface, is in a horizontal position during all operations. The apparatus 1000 comprises a loading zone 120, a cutting station 100 with a cutting device, or bridge, 101, a positioner 102, a subsequent rotation device 140 and an unloading zone 150. In the situation shown in fig. 2, the first cut X1 has already been made on the sheet of fig. 1, the intermediate panel P1 has already been rotated by 90° and returned to the cutting zone, while the sheet section consisting of the set of panels P2, P3 and P4, still joined together, has returned toward the loading zone so as to free the cutting bridge. The apparatus is therefore ready to perform the first Y cuts (Y1, Y2, ..., Y5) on the panel P1.

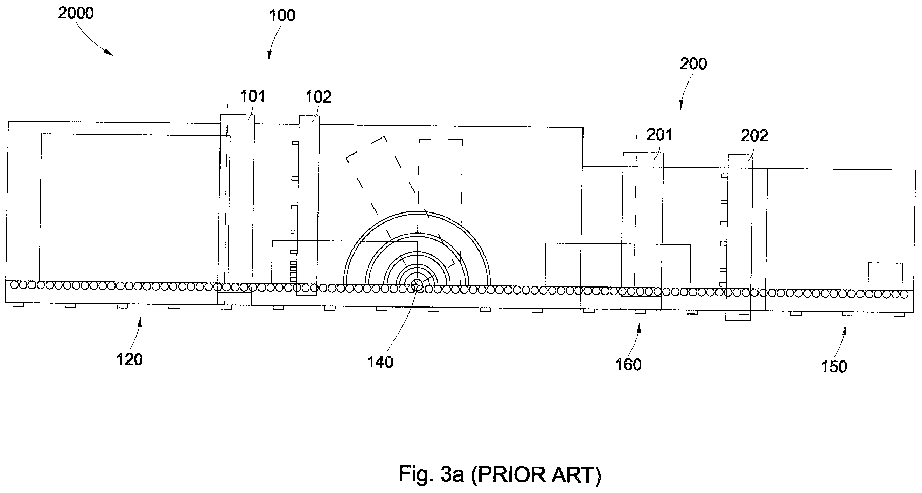

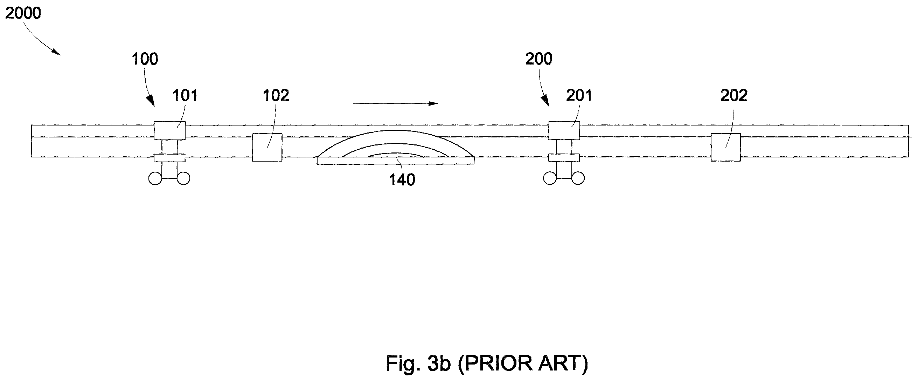

In order to increase productivity, some apparatuses for cutting laminated glass comprise two cutting stations 100 and 200, each provided with a respective cutting bridge 101, 201, respective positioners 201, 202 and an intermediate rotation device 140, which work in sequence, as shown in figs. 3a and 3b, which show the front view and plan view, respectively, of a cutting apparatus 2000, this time in a vertical configuration. The vertical cutting apparatus is configured so as to present the rest plane of the glass sheet in a position slightly inclined with respect to the vertical, defined as sub-vertical, which is generally understood as an inclination with respect to the vertical of between 3° and 15°, for example equal to 6°. To adequately support the weight of the glass sheet in this sub-vertical position and to also provide for its translation in the working direction L, there are adequate support and translation means that act on the lower side of the sheet. The operation and the cutting method are completely similar to those of the so-called horizontal apparatuses described previously.

In the case of apparatuses with two cutting stations in succession along the working line, the simplest solution to manage the operations to be performed is to assign the first cutting bridge to perform the X cuts and the second cutting bridge to perform the Y/Z/W cuts. From the example described above it can be seen that the number of cuts to be performed in the first bridge is clearly lower than that of the second bridge, with the result that the first bridge, while waiting for the second bridge to complete all the respective cuts, remains unproductive for most of the time, resulting in unsatisfactory productivity.

A first solution involves performing part of the Y cuts on the first bridge, to pursue the objective of an almost balanced operating time between the two bridges. However, this solution involves many returning movements from the rotation zone back toward the first bridge, which obviously require time and negatively affect productivity.

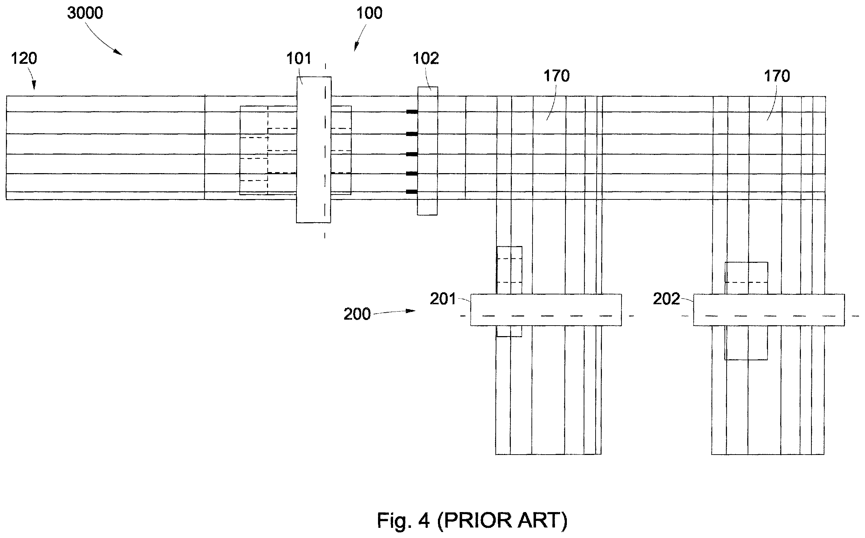

In order to increase efficiency, solutions have been introduced, represented by way of example by the apparatus 3000 of fig. 4, in which, after the cutting station 100 with the first bridge 101 and the positioner 102, there is a second cutting station 200 in which an additional two cutting bridges 201 and 202 are provided, disposed to operate in parallel with each other with respect to the flow of the glass sheets. Translators 170 are provided to translate the panels at exit from the first cutting station 100 and direct them in parallel toward the bridges 201 and 202 of the second cutting station 200. In this solution, shown in fig. 4, the cutting bridges 201 and 202 are disposed in parallel, but with a cutting direction orthogonal to that of the first bridge 101. This avoids the rotation device downstream of the first bridge 101.

Although the latter solution described is more efficient than the previous ones, upon a quick assessment based on the example shown in fig. 1, one realizes that the first bridge 101 still remains unproductive for a large part of the time taken by the bridges 201 and 202 to perform their task. In fact, in the solution of fig. 4, the first bridge 101 of the first cutting station 100 performs all the X cuts, that is, 3 cuts, while the Y/Z/W cutting operations are divided between the bridges 201 and 202 of the second cutting station 200, that is, 13+7+3=23 cuts, respectively, which, even if divided between two bridges, involve a considerably longer execution time compared to what is required by the first bridge 101 to perform only 3 cuts. For a more complete understanding of the assessment set forth above, it should be added that each cutting operation requires a correct positioning of the sheet and that, in order to perform the Z and W cuts, the appropriate rotations downstream of the bridges 201 and 202 have to be performed, while the first bridge 101 does not have to perform rotations, but only three subsequent positionings. It should also be considered that the length of the cut (greater for X cuts and gradually smaller for Y and Z cuts), does not greatly influence the cycle time, since the steps of scoring and cutting the film, which in themselves would be affected by the length of the cut, are actually very fast, while the heating steps and all the necessary positionings (which take up by far most of the cycle time) are independent of the length of the cut.

Considering the increasing use of laminated glass as safety glass, there is a need to provide an apparatus for cutting sheets of glass that is optimized and can achieve the maximum productivity of the stations and devices used.

There is therefore the need to perfect an apparatus and method for cutting sheets of glass, or other glass substitute materials, that can overcome at least one of the disadvantages of the state of the art.

In particular, one purpose of the present invention is to provide an apparatus and method for cutting glass sheets that are advantageously suitable to balance the cycle times of the apparatus' stations, with the consequent result of increasing productivity.

Another purpose is also to provide an apparatus for cutting glass sheets that occupies as little floor space as possible, thus reducing the cost of the production facility.

Another purpose of the present invention is to improve operator safety by reducing any direct intervention in operations for moving the glass sheets to a minimum.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, some embodiments described here concern an apparatus for cutting sheets of glass, or other glass substitute materials. The apparatus comprises, in a working direction, a first cutting station downstream of which there is a rotation device configured to rotate, in their rest plane, panels obtained from a sheet cut in the first cutting station, modifying an angular position thereof with respect to the working direction. Downstream of the rotation device in the working direction there are, in series, a second cutting station and at least a third cutting station.

In possible embodiments, the apparatus comprises a control unit configured to control and command each cutting station to perform overall a number of cutting operations "1" on each sheet in accordance with an overall cutting pattern of the sheet, which includes a plurality "m" of cutting operations performed in the first cutting station and a plurality "n" of cutting operations performed overall in the second and in the at least third cutting station, wherein the sum of "m" and "n" is equal to "1".

In possible embodiments, the control unit is configured to divide the number of cutting operations "1" so as to optimize a difference between an execution time of the "m" cutting operations performed in the first cutting station on a specific sheet and an execution time required to perform overall the "n" cutting operations on panels deriving from the specific sheet in the second and in the at least third cutting station.

In possible embodiments, the control unit is configured to command and control the second and at least third cutting station to perform a number "p" of cutting operations in the second cutting station and to perform a number "q" of cutting operations in the at least third cutting station, wherein the sum of the number of cutting operations "p" and "q" is equal to the number of cutting operations "n".

In possible embodiments, the control unit is configured to divide the number of cutting operations "n" in such a way as to optimize a difference between a specific cycle time for performing the "p" cutting operations of the second cutting station and a specific cycle time for performing the "q" cutting operations of the at least third cutting station.

Other embodiments concern a method for cutting sheets of glass, or other glass substitute materials. The method comprises performing, in a working direction, a first step of cutting a sheet in a first cutting station, rotating, in their rest plane, panels obtained from the cut sheet, modifying an angular position thereof with respect to the working direction and, downstream of the rotation, performing in series in the working direction a second cutting step and at least a third cutting step in a second cutting station and in at least a third cutting station, respectively.

In possible embodiments, the method comprises performing overall a number of cutting operations "1" on each sheet in accordance with an overall cutting pattern of the sheet, which includes a plurality "m" of cutting operations performed in the first cutting station and a plurality "n" of cutting operations performed overall in the second and in the at least third cutting station, wherein the sum of "m" and "n" is equal to "1".

In possible embodiments, the method divides the number of cutting operations "1" in such a way as to optimize a difference between an execution time of the "m" cutting operations performed in the first cutting station on a specific sheet and an execution time required to perform overall the "n" cutting operations on panels deriving from the specific sheet in the second and in the at least third cutting station.

In possible embodiments, the method provides to perform a number "p" of cutting operations in the second cutting station and to perform a number "q" of cutting operations in the at least third cutting station, wherein the sum of the number of cutting operations "p" and "q" is equal to the number of cutting operations "n".

In possible embodiments, the method also comprises dividing the number of cutting operations "n" in such a way as to optimize a difference between a specific cycle time for performing the "p" cutting operations of the second cutting station and a specific cycle time for performing the "q" cutting operations of the at least third cutting station.

Other embodiments concern an apparatus, and a corresponding method, for cutting sheets of glass, or other glass substitute materials, in particular able to perform a part of the cutting operations provided by the cutting pattern with the sheet disposed on a rest plane that is inclined with respect to the vertical, in particular with an inclination with respect to the vertical of between 3° and 15°, and the remaining cutting operations provided by the cutting pattern with the sheet disposed on a horizontal rest plane.

In possible embodiments, this apparatus comprises, in a working direction, a first cutting station downstream of which there is a rotation device configured to rotate, in their rest plane, panels obtained from a sheet cut in the first cutting station, modifying an angular position thereof with respect to the working direction, wherein downstream of the rotation device, in the working direction, there are, in series, a second cutting station and at least a third cutting station. Each cutting station comprises cutting means configured to perform cutting operations in respective cutting directions. The cutting means of the at least third cutting station comprise at least two cutting devices disposed and configured to operate in parallel with each other, according to a flow of panels to be cut. The at least two cutting devices are configured to perform the cutting operations with panels to be cut being disposed with a rest plane thereof in a horizontal position.

In possible embodiments, the apparatus comprises a shuttle configured mobile so as to transport, in a translation direction transverse to the working direction, panels to be cut from the second cutting station toward the at least third cutting station.

In possible embodiments, the shuttle is also configured to rotate around an axis of rotation so as to rotate the panels from a sub-vertical position to a horizontal position. This rotation is useful for the purpose of positioning the panels to be cut in a manner that is coordinated with the cutting devices, in particular to make the panels to be cut available to the cutting devices that operate in parallel and perform the cut with the panels disposed on a horizontal rest plane.

In possible embodiments, the shuttle is provided with at least two housing compartments to receive and transport the panels.

In possible embodiments, the shuttle is also provided with translation means configured to translate the shuttle in a vertical direction so as to selectively position one or the other of the at least two compartments at a desired height which advantageously is operationally coordinated, in particular aligned, with a vertical height of the cutting devices described above, in order to make the panels available thereto.

This capacity for vertical translation of the shuttle can be useful because, after the shuttle has rotated as described above, the panels are in a horizontal position and housed in compartments that are effectively one above the other, disposed vertically. Thanks to the vertical translation of the shuttle, the at least two compartments can therefore be disposed at different vertical heights, so that the panels of each compartment can be correctly directed toward the respective cutting device. In other words, in this way, the characteristics of the vertically mobile make it possible to selectively align the vertical height of one or the other compartment, and of the panels housed therein, with the vertical height of the respective cutting device.

A method for cutting sheets of glass, or other glass substitute materials, using a shuttle as disclosed here comprises operating steps described here with reference to the apparatus that comprises the aforementioned shuttle.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic top view of a glass sheet, with an indication of the cuts to be performed in order to obtain the individual glass panels starting from a sheet of a commercial format;
- fig. 2 is a schematic top plan view of an apparatus for cutting glass sheets;
- fig. 3a is a schematic front view of an apparatus for cutting glass sheets in a vertical configuration;
- fig. 3b is a schematic top plan view of the apparatus of fig. 3a;
- fig. 4 is a schematic top plan view of an apparatus for cutting glass sheets in a horizontal configuration;
- fig. 5a is a top plan view of an apparatus for cutting glass sheets in accordance with some embodiments described here;
- fig. 5b is a top plan view of an apparatus for cutting glass sheets in accordance with other embodiments described here;
- fig. 6 is a top plan view of an apparatus for cutting glass sheets in accordance with additional embodiments described here.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

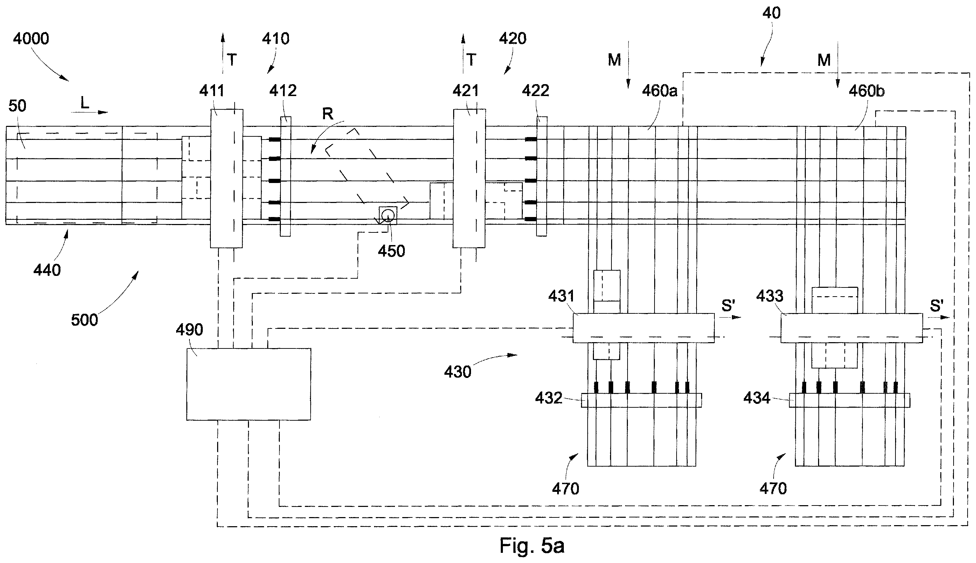

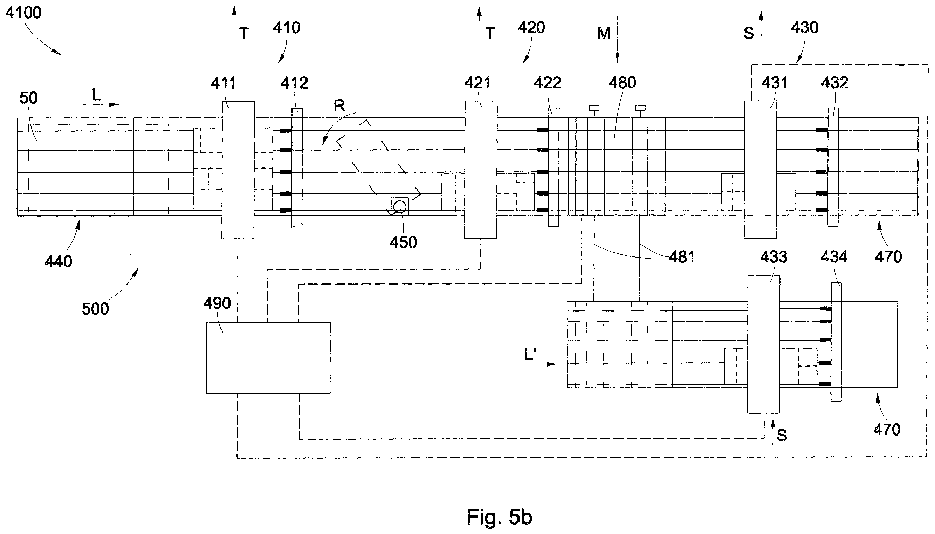

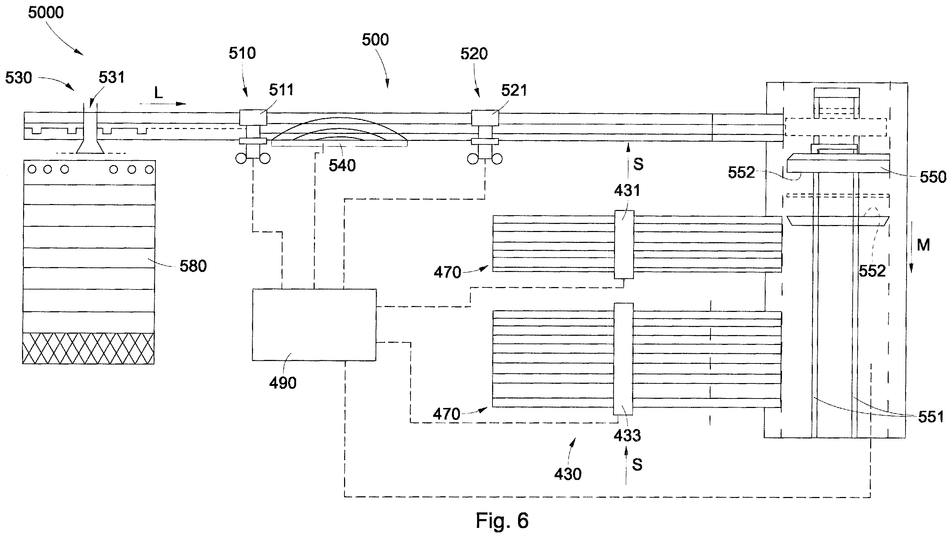

Some embodiments described using figs. 5a, 5b and 6 concern an apparatus 4000, 4100, 5000 for cutting sheets 50 of glass, or other glass substitute materials, which comprises a cutting line 500 having a plurality of cutting stations 410, 510, 420, 520, 430 disposed in a working direction L.

The apparatus 4000, 4100, 5000 can comprise a loading zone 440, 530, generally provided upstream of the cutting stations 410, 510, 420, 520, 430 in the working direction L.

The apparatus 4000, 4100, 5000 can optionally comprise a magazine station 580 for feeding the sheets 50 to the cutting line 500.

Each cutting station 410, 510, 420, 520, 430 is equipped with positioning means, or simply positioners, 412, 422, 432, 434, for positioning the sheets 50, so as to position and move the sheets 50 in the working direction L or in directions transverse thereto, such as the translation direction M of fig. 5a, or parallel thereto, such as the direction L' in fig. 5b.

Furthermore, each cutting station 410, 510, 420, 520, 430 comprises its own cutting means 411, 511, 421, 521, 431, 433 for cutting the sheets 50.

The cutting means 411, 511, 421, 521, 431, 433 are configured to perform cutting operations on the sheets 50 in each cutting station 410, 510, 420, 520, 430 in respective cutting directions T, S.

Each cutting station 410, 510, 420, 520, 430 has its own cycle time, which has a duration coordinated with an execution time for performing the cutting operations to be carried out in the respective cutting station 410, 510, 420, 520, 430.

The cutting stations 410, 510, 420, 520, 430 comprise a first cutting station 410, 510 provided with cutting means 411, 511 configured to cut the sheets 50 in a first cutting direction T, for example transverse to the working direction L, defined with respect to a first angular position assumed by the sheet 50 in the first cutting station 410, 510. The first cutting station 410 is able to perform all the cutting operations to be carried out on the sheet 50 and sheet sections, generally referred to as "X cuts" or simply "X" as defined above.

In series with the first cutting station 410, 510, directly downstream in the working direction L, there is at least one rotation device 450 configured to rotate, in their rest plane, glass panels obtained from the sheets 50 cut in the first cutting station 410, 510, changing their angular position with respect to the working direction L.

The rotation device 450 can be, in particular, configured to rotate, that is, angularly position, the panels obtained from the sheets 50 in accordance with specific angular positions that they have to assume and that are coordinated with specific directions of cuts to be performed along the panels in the subsequent cutting stations.

Downstream of the rotation device 450 there are a second cutting station 420, 520 and at least a third cutting station 430, in series with each other with respect to the working direction L and provided with respective cutting means 421, 521, 431, 433 configured to cut panels obtained from the sheets 50 cut in the first cutting station and rotated in respective second and third cutting directions defined with respect to a second and third angular position assumed by the panels in the second 420, 520 and third cutting station 430, respectively.

In some embodiments, a cutting direction of the cutting means 411, 511, 421, 521, 431, 433 in each cutting station 410, 510, 420, 520, 430 is a cutting direction that is predetermined and constant for that station, in particular with respect to the working direction L and to the angular position assumed by the sheet 50, or by the panels obtained from such sheet 50 in the respective station.

In some embodiments, in the first 410, 510 and in the second cutting station 420, 520 the predetermined and constant cutting direction can be a cutting direction T transverse, in particular orthogonal, to the working direction L.

In some embodiments, the third cutting station 430 also provides that the predetermined and constant cutting direction S is a cutting direction T transverse, in particular orthogonal, to the working direction L. Alternatively, the predetermined and constant cutting direction in the third cutting station 430 can be a cutting direction S' parallel to the working direction L.

In some embodiments, the cutting means 431, 433 of the aforementioned at least a third cutting station 430 can comprise at least two cutting devices disposed and configured to operate in parallel with each other according to the flow of the glass panels, as described below using figs. 5a, 5b and 6. In this case, the respective cutting directions of the two cutting devices disposed in parallel can be cutting directions S' parallel to the working direction L (fig. 5a), or cutting directions S transverse (figs. 5b, 6) to the working direction L, depending on the variants.

These cutting means, or devices, 431, 433 can be configured to perform the cutting operations with the panels to be cut disposed in a horizontal position.

The second and third angular positions of the panels in the second 420, 520 and in the third cutting station 430 can be the same, if there is no rotation of the panels between the second cutting station 420, 520 and the at least a third cutting station 430, and in this case the respective cutting means are configured to operate in respective second and third cutting directions that are different from each other.

Alternatively, the second and third angular position of the panels can be different, if there is a rotation of the panels between the second cutting station 420, 520 and the at least a third cutting station 430, and in this case the respective cutting means can be configured to operate in respective second and third cutting directions that are the same as, or parallel to, or different from, each other, depending on the extent and type of rotation.

In some embodiments, the rotation device 450 is configured to rotate the panels deriving from the cutting of sheets 50 in the first cutting station 410, 510, so that the specific angular positioning of the panels at least in the second cutting station 420, 520 determines the direction in which the corresponding panels will be cut by the respective cutting means 421, 521, while keeping the predetermined direction of the cutting means 421, 521 constant, at least in the second cutting station 420, 520, which can be favorably the same as the direction of the cutting means 411, 511 in the first cutting station 410, 510.

The second cutting station 420, 520 is able to perform cutting operations to be carried out on panels obtained by the cutting of a sheet 50 in the first cutting station 410, 510, generally referred to as "Y cuts" or simply "Y" as defined above.

The third cutting station 430 is able to perform cutting operations, also generally referred to as "Y cuts" or simply "Y", on panels on which cutting operations have already been performed in the second cutting station 420, 520 as described above, and furthermore it is also able to perform cutting operations generally referred to as "Z cuts" or simply "Z" and possibly, if necessary, also perform cutting operations generally referred to as "W cuts" or simply "W", as defined above.

The apparatus 4000, 4100, 5000 comprises a control unit 490 configured to control and command at least each cutting station 410, 510, 420, 520, 430, in order to carry out the necessary cutting operations on the sheet 50 and the panels deriving therefrom, according to a desired cutting pattern of the sheet 50.

In some embodiments, the control unit 490 can be local or remote with respect to the apparatus 4000, 4100, 5000 described here.

In some embodiments, the control unit 490 can comprise a central processing unit, or CPU, an electronic memory, an electronic database and auxiliary (or I/O) circuits. The software instructions and data to execute the method described here can for example be encoded and stored in the memory to command the CPU. A program (or computer instructions) readable by the control unit 490 can determine which tasks are achievable in accordance with the method according to the present disclosure. In some embodiments, the program is software readable by the control unit 490. The control unit 490 can include a code for generating and storing information and data entered or generated in the course of the method in accordance with the present disclosure.

In some embodiments, the control unit 490 is configured to perform overall a number of cutting operations "1" on each specific sheet 50 and on the respective panels obtained, in accordance with the desired overall cutting pattern of the sheet 50. This cutting pattern can, for example, be selected initially at the beginning of a work cycle of the apparatus described here, for example according to the type and/or format of the sheets to be cut and/or the panels to be produced.

This cutting pattern of the sheet 50 includes a plurality "m" of cutting operations performed in the first cutting station 410, 510, and a plurality "n" of cutting operations performed overall in the second station 420, 520 and in the at least third cutting station 430, wherein the sum of "m" and "n" is equal to "1".

The control unit 490 is configured to perform a number "m" of cutting operations in the first cutting station 410, 510, and an overall number "n" of cutting operations in the second 420, 520 and in the at least third cutting station 430.

Generally, but without this constituting any limitation whatsoever to the scope of protection of the present invention, it is possible for the number "m" of cutting operations performed in the first cutting station 410, 510 to be defined a priori, that is to say that the first cutting station 410, 510 always and only performs all the respective cuts referred to as "X".

In particular, the control unit 490 is configured to divide the number of cutting operations "1" so as to optimize, specifically reduce and more specifically minimize, a difference between an execution time of the "m" cutting operations performed in the first cutting station 410, 510 on a specific sheet 50 and an execution time required to perform overall the "n" cutting operations on panels deriving from the specific sheet 50 in the second 420, 520 and in the at least third cutting station 430.

For example, the control unit 490 can define that an execution time of the "m" cutting operations performed in the first cutting station 410, 510 on a specific sheet 50 is less than or equal to the sum of the total time required to perform the "n" cutting operations on the specific sheet 50 in the second 420, 520 and in the at least third cutting station 430.

The control unit 490 is configured to command and control the second 420, 520 and third cutting station 430 to perform a number "p" of cutting operations in the second cutting station 420, 520, and to perform a number "q" of cutting operations in the at least third cutting station 430, wherein the sum of the number of cutting operations "p" and "q" is equal to the number of cutting operations "n".

The control unit 490 is configured to divide the number of cutting operations "n" so as to optimize, specifically reduce and more specifically minimize, a difference between a specific cycle time for performing the "p" cutting operations of the second cutting station 420, 520 and a specific cycle time for performing the "q" cutting operations of the at least third cutting station 430.

For example, the control unit 490 may define that a specific cycle time for performing the "p" cutting operations of the second cutting station 420, 520 and a specific cycle time for performing the "q" cutting operations of the at least third cutting station 430 is individually equal to or less than the cycle time for performing the "m" cutting operations of the first cutting station 410, 510.

Advantageously, according to the embodiments described here, the control unit 490 is configured to distribute the "n" cutting operations between the second 420, 520 and the at least third cutting station 430, so that the cycle time, and therefore the workload, for performing the "n" cutting operations is balanced across several cutting stations that follow the first cutting station 410, 510, thus reducing the risk of bottlenecks that would occur if all the "n" operations were performed in only one second station in series with the first station. In particular, the control unit 490 is configured to distribute the "n" operations into a number "p" of cutting operations performed in the second cutting station and a number "q" of cutting operations performed in the at least third cutting station, wherein the sum of "p" and "q" is equal to "n".

In this way, the process for cutting a sheet 50 and the panels deriving therefrom according to the present invention is optimized and synchronized, guaranteeing that all the cutting stations operate efficiently, without causing any delays or bottlenecks in the production flow.

Likewise, in the event that the cutting means of the at least a third cutting station 430 comprise at least two cutting devices 431, 433 disposed and configured to operate in parallel with each other according to a flow of panels to be cut, the control unit 490 is configured to command and control the two cutting devices 431, 433 to perform in parallel a number "r" of cutting operations in a first cutting device 431 and a number "s" of cutting operations in a second cutting device 432, wherein the sum of the number of cutting operations "r" and "s" is equal to the number of cutting operations "q". Advantageously, the control unit 490 is configured to divide the number of cutting operations "q" so as to optimize a difference between a specific cycle time for performing the "r" cutting operations of the first cutting device 431 and a specific cycle time for performing the "s" cutting operations of the second cutting device 432.

Furthermore, according to some embodiments described here, the control unit 490 is configured to simultaneously consider or analyze not only the cutting operations associated with the cutting pattern of a single sheet 50, but also those derived from a plurality of cutting patterns derived, respectively, from a succession of sheets 50, forming part of a wider production plan, in order to optimize the overall cycle time of the cutting stations 410, 510, 420, 520, 430.

Advantageously, according to the embodiments described here, the control unit 490 is configured, for the purpose of the optimizations described above, to define the most advantageous sequence of the sheets 50 that form part of a production plan. In other words, the control unit 490 also defines the order in which the sheets that form part of a production plan are processed, so as to optimize the cutting process, that is, optimize the overall cycle time of the cutting stations 410, 510, 420, 520, 430, in the sense described above.

Fig. 5a is used to describe embodiments of an apparatus for cutting glass sheets, indicated as a whole with reference number 4000. For example, the sheets can be of laminated glass, specifically safety laminated glass. The apparatus 4000 is suitable to cut such glass sheets in a horizontal configuration, meaning by this that the apparatus is constructed so as to have the translation, rotation and cutting planes, which support the sheet and the panels deriving therefrom during working, in a horizontal position. In this way, the sheet, with respect to its larger surface, is in a horizontal position during all operations.

The apparatus 4000 comprises a loading zone 440, which for example can consist essentially of a horizontal support table suitable to accommodate a laminated glass sheet 50, for example, which has to be divided into several glass panels. The loading zone 440 is provided with translation means for transferring the glass sheet 50 to subsequent stations in the working direction L.

The apparatus 4000 comprises a first cutting station 410 provided with its own cutting means, for example a first cutting bridge 411, suitable to perform all the operations of the method for cutting the laminated glass in a cutting direction T transverse to the working direction L in the first cutting station 410.

The first cutting station 410 comprises positioning means, for example a positioner 412, consisting for example, in one possible embodiment thereof, of a series of grippers for holding an edge of the sheet 50 and provided with means for moving the glass sheet in the working direction L before, during and after the cutting operations. This movement can advantageously be performed in both senses in the working direction L, not only to make a section of the sheet 50 advance but also to move it backward so as to carry out additional cuts in the first cutting station 410.

The apparatus 4000 also comprises a rotation device 450 located downstream of the first cutting station 410 and suitable for the rotation (arrow R) of panels in their rest plane, which come from the first cutting bridge 411. The rotation can be for example of 90° around an axis of rotation perpendicular to the rest plane of the glass sheets.

The apparatus 4000 comprises a second cutting station 420 provided with its own cutting means, for example a cutting device, such as a second cutting bridge 421, analogous to the first cutting bridge 411, disposed immediately downstream of the rotation device 450. The second cutting bridge 421 has a cutting line parallel to the cutting direction T. The second cutting station 420 is also provided with a respective positioner 422.

The apparatus 4000 also comprises at least a third cutting station 430 provided with its own cutting means. For example, these cutting means can include at least two cutting devices, for example two cutting bridges 431 and 433, disposed in parallel according to the flow of the glass panels; the cutting bridges 431 and 433 can be located in such a way that their cutting line is in a cutting direction S' orthogonal to the cutting direction T of the first bridge 411 and of the second cutting bridge 421, for example parallel to the working direction L.

The third cutting station 430 is provided with positioners 432, 434 of the respective cutting bridges 431 and 433, similar to the already described positioners 412 and 422.

The apparatus 4000 also comprises unloading zones 470 associated with the respective cutting bridges 431 and 433.

The apparatus 4000 also comprises translator means 40, for example a first translator 460a and at least a second translator 460b, which can be orthogonal axis translators, disposed in the working direction L. In particular, the first translator 460a is disposed between the second cutting station 420 and the cutting bridge 431, and the second translator 460b is disposed between the first translator 460a and the cutting bridge 433. These translator means are constructed so as to be able to receive the glass panels coming from the cutting bridge 421 in the working direction L, and to direct them in a translation direction M, transverse to the working direction L, toward the cutting bridge 431 and the cutting bridge 433, respectively (see fig. 5a). It should be noted that the translation direction M is, in the embodiments described using fig. 5a, essentially parallel to the cutting direction T of the cutting bridges 411 and 421 and orthogonal to the cutting direction S' of the cutting bridges 431 and 433.

The apparatus 4000 also comprises a control unit 490 configured to control and command all the elements constituting the apparatus 4000 and the flow of the glass panels between the zones of the apparatus, according to what described above.

Fig. 5b is used to describe other embodiments of an apparatus for cutting glass sheets, indicated as a whole with reference number 4100. The apparatus 4100 is suitable to cut the glass sheets in a horizontal configuration, as for example the embodiments described using fig. 5a, in relation to which the differences will be described below, while the common parts will not be described again.

Compared to what described using fig. 5a, the third cutting station 430 of fig. 5b has the cutting bridges 431 and 433 always parallel to each other, but with the cutting direction S of the respective cutting lines parallel to the cutting direction T of the cutting bridges 411 and 421, and therefore transverse to the working direction L.

Furthermore, in the embodiments described using fig. 5b, the translator means 460 are replaced by a mobile rotation device 480, which operates the possible rotation of the panels received from the cutting bridge 421, and their transfer toward the cutting bridge 431 or, through translation on guides 481, for example two guides, toward the cutting bridge 433, in a translation direction M transverse to the working direction L. We must clarify that the translation direction M is, in the embodiments described using fig. 5b, in fact parallel to the cutting direction T of the cutting bridges 411 and 421, and also parallel to the cutting direction S of the cutting bridges 431 and 433.

Fig. 6 is used to describe other embodiments of an apparatus for cutting glass sheets, indicated as a whole with reference number 5000. The differences with respect to the embodiments described using figs. 5a and 5b are described below, while the common parts are not described again.

The apparatus 5000 for cutting laminated glass has a loading zone 530, provided for example with an automatic loader 531.

In addition, the apparatus 5000 comprises a first cutting station 510 provided with its own cutting means, for example a cutting bridge 511.

The apparatus 5000 comprises a rotation device 540 disposed downstream of the first cutting station 510. This rotation device 540 is suitable for the rotation of glass panels in their rest plane. The rotation can be for example of 90° around an axis of rotation perpendicular to the rest plane of the glass sheets. It can for example be analogous to the rotation device 450.

In addition, the apparatus 5000 comprises a second cutting station 520 provided with its own cutting means, for example a cutting bridge 521.

The first cutting station 510 and the second cutting station 520 are suitable to cut glass sheets in a configuration slightly inclined with respect to the vertical, defined as sub-vertical, that is, an inclination with respect to the vertical of between 3° and 15°, for example 6°. For this purpose, the first cutting station 510 and the second cutting station 520 are constructed so as to have the rest plane of the glass sheet in a position slightly inclined with respect to the vertical, as defined above. To adequately support the weight of the glass sheet in this position, and to also provide for its translation in the working direction L, there are suitable support and translation means that act on the lower side of the sheet and of the panels obtained therefrom.

The apparatus 5000 also comprises at least a third cutting station 430, which can be analogous to that described above. The latter is suitable to cut the glass sheets in a horizontal configuration, as in the embodiments described using figs. 5a and 5b.

In the embodiments described using fig. 6, the transport of the panels between the zone of exit from the second cutting station 520 and the subsequent cutting bridges 431 and 433, which form part of the at least third cutting station 430, can be entrusted to a shuttle 550, provided with at least one compartment 552, or possibly more than one as explained below, to receive and transport panels.

The shuttle 550 is configured mobile to transport, in a translation direction M transverse to the working direction L, panels to be cut from the second cutting station 520 toward the at least third cutting station 430. As described above, the shuttle 550 can be provided with one or more housing compartments 552, for example at least two, to receive and transport the panels. In some embodiments, the shuttle 550 can also be configured to rotate so as to dispose the panels in a horizontal position and, in addition, in particular in the event it is provided with at least two compartments 552, it can be configured to translate vertically so as to selectively position the compartments 552 at a height that is coordinated with the height of the work plane of cutting means, or devices or bridges 431, 433 of the at least third cutting station 430.

The shuttle 550 therefore receives the glass panels from the second cutting zone 520 in a vertical or sub-vertical position, completes a translation toward the cutting bridge 431 or 433 through guides 551, for example two guides, in the translation direction M. In addition, the shuttle 550 completes a rotation of the rest plane of the panel from the vertical or sub-vertical position to the horizontal position, so as to make it available to the cutting bridges 431 or 433, respectively. We must clarify that the translation direction M is, in the embodiments described using fig. 6, essentially parallel to the cutting direction T of the cutting bridges 411 and 421, and also parallel to the cutting direction S of the cutting bridges 431 and 433. After this, if it is provided for example to align the compartments 552 with the work plane of the cutting bridges 431 or 433, the shuttle 550 translates vertically.

In the embodiments described using fig. 6 there can be, in correspondence with the loading zone 530, a magazine 580 for sheets, for example for commercial format glass sheets. As known to the person of skill in the art, the glass sheets that constitute the raw material of the cutting lines are generally stored in an upright position. An automatic loader 531 can be provided that is responsible for removing the sheets from the magazine 580 and positioning them on the loading zone 530 of the apparatus 5000.

With respect to the state of the art of figs. 3a, 3b and fig. 4, the embodiments described using fig. 5a, and applicable in an analogous manner to the embodiments described using figs. 5b and 6, are characterized by the introduction of a second cutting station between the rotation device 450 and the subsequent at least a third cutting station. Since the panels at exit from the first cutting bridge 411 are rotated, for example by 90°, by the rotation device 450, the second cutting bridge can perform cuts referred to as Y. However, in order to become available to receive the next intermediate panel produced by the first cutting bridge 411 and rotated by the rotation device 450, the second cutting bridge will not perform all the Y cuts provided, but only one or some of them, leaving the remaining Y cuts (and subsequent and possible cuts referred to as Z and W) to be performed in the at least a third cutting station by the respective cutting bridges, possibly disposed in parallel with each other as described above. In this way, an optimal balancing of the various cutting stations of the line of the apparatus described here is achieved, with a significant increase in productivity.

Further optimizations can possibly be achieved by introducing, for example, downstream of the second cutting station, one or more stopping stations for the intermediate panels in transit toward the subsequent stations. These possibilities should be defined based on each specific case and the performance levels to be achieved in terms of line productivity. This consideration is also applicable to the embodiments described using fig. 5a, and can easily be applied to the alternative configuration of the embodiments described using figs. 5b and 6.

Possible embodiments of a method for cutting a glass sheet 50, for example a laminated glass sheet, are described here by way of example, with reference to the apparatus 5000 as in fig. 6. In some embodiments, the method comprises the following steps:
- on the basis of an overall cutting pattern of the sheet 50, the control unit 490 detects, or in any case determines, the overall number "1" of cutting operations to be performed;
- the control unit 490 divides the "1" overall cutting operations into "m" cutting operations to be performed in the first cutting station 510 and into "n" cutting operations to be performed in the second cutting station 520 and in the at least a third cutting station 430, so that the sum of the "m" cutting operations and the "n" cutting operations is equal to "1" and that the difference between the cycle time to perform the "m" cutting operations and the cycle time to perform the "n" cutting operations is as small as possible;
- the control unit 490 divides the "n" cutting operations into a number "p" of cutting operations to be performed in the second cutting station 520 and a number "q" of cutting operations to be performed in the at least a third cutting station 430, so that the sum of the "p" cutting operations and the "q" cutting operations is equal to "n" and that the difference between the cycle time to perform the "p" cutting operations and the cycle time to perform the "q" cutting operations is as small as possible.

From the simulations and tests carried out by the Applicant it has emerged that comparing the apparatus described using fig. 4, where the cutting operations (Y, Z, W) subsequent to the cutting operations (X) performed in the first cutting station 100 are all performed in the second cutting station 200 disposed in series, with the productivity of the apparatuses in accordance with the embodiments described using figs. 5a, 5b and 6, the productivity of the latter is at least 50% higher. This excellent result is favorably achieved by adding an additional cutting station downstream of the first cutting station and applying the method described above, with a considerable reduction in the time required for a return on the investment made for the purchase of the machinery.

Always based on the simulations and tests carried out by the Applicant, it was found that a further increase in productivity can be achieved by equipping the shuttle 550 described using fig. 6 with at least one second compartment 552 as described above by way of example (indicated with a dashed line in fig. 6) to house the glass panels and transport them toward the at least a third cutting station 430. In fig. 6, the shuttle 550 is represented with at least two compartments 552 disposed side by side. These at least two compartments 552 are visible in fig. 6 because the shuttle 550 has yet to complete the rotation that brings the panels into a horizontal position so as to make them available in this condition to the cutting bridges 431, 433 that operate in parallel. This configuration with at least two compartments 552 results in the shuttle 550 being equipped, as well as with the ability to move along the guides 551 and rotate so as to bring the glass panels from the vertical or sub-vertical position to the horizontal position, also with an additional ability to translate, generally in a vertical direction, so as to align the various compartments 552 in height, at the height of the work planes of the cutting bridges 431, 433 of the at least a third cutting station 430.

Still with reference to the shuttle 550 provided with at least two compartments 552 described using fig. 6, as stated the Applicant has found that adopting this solution can lead to an increase in productivity in a cutting apparatus and method in accordance with the embodiments described here, wherein it is provided to carry out a part of the cutting operations with the sheets 50 and the corresponding panels in a vertical or sub-vertical position, and another part of the cutting operations with the panels in a horizontal position. Therefore, one aspect of the apparatus and method described here, which can possibly be combined with other embodiments described here, can concern an apparatus and method which are able to perform some cutting operations in a sub-vertical position and other cutting operations in a horizontal position, and which are provided with, or use, a shuttle 550, for example as described above.

With reference to the apparatus 5000 described using fig. 6, the characteristic of performing a part of the operations with the glass sheets and panels in a sub-vertical position, as previously defined, entails an advantage in terms of safety compared to alternative horizontal solutions (see figs. 5a and 5b). In fact, it has been found that, especially in the case of sheets of large sizes, the risk of breakage of the sheets is considerably lower for the sub-vertical configurations.

It is evident that the embodiments described here using for example figs. 5a, 5b and 6 allow to overcome the limits of the state of the art, realizing the cutting of laminated glass sheets with high productivity, eliminating waiting times and the inoperability of parts of the line. This allows to maximize the return on investment for the purchase of the machinery. Some embodiments can provide to execute various steps, passages and operations, as described above. These steps, passages and operations can be performed with instructions executed by a machine which cause the execution of certain steps by a general-purpose or special-purpose processor. Alternatively, these steps, passages and operations can be executed by specific hardware components that contain hardware logic to perform the steps, or by any combination whatsoever of programmed computer components and custom hardware components.

The embodiments of the method in accordance with the present disclosure can be included in a computer program storable in a computer-readable medium which contains the instructions which, once executed by the control unit 490, determine the execution of the method in question.

In particular, some elements according to the present invention can be supplied as means suitable to store electronic and machine-readable information, to store the machine-executable instructions. For example, the method according to the present invention can be downloaded as a computer program that can be transferred from a remote computer (for example, a server) to a requesting computer (for example, client), by means of data signals created with wave carriers or other propagation means, via a communication link (for example, a modem or network connection).

It is clear that modifications and/or additions of parts may be made to the apparatus and method for cutting sheets of glass, or other glass substitute materials, as described heretofore, without thereby departing from the field and scope of the present invention, as defined by the claims.

It is also clear that, although the present invention has been described with reference to some specific examples, a person of skill in the art will be able to achieve other equivalent forms of apparatus and method for cutting sheets of glass, or other glass substitute materials, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Apparatus (4000, 4100, 5000) for cutting sheets of glass, or other glass substitute materials, **characterized in that** said apparatus (4000, 4100, 5000) comprises, in a working direction (L), a first cutting station (410, 510) downstream of which there is a rotation device (450) configured to rotate, in their rest plane, panels obtained from a sheet (50) cut in the first cutting station (410, 510), modifying an angular position thereof with respect to the working direction (L), wherein downstream of the rotation device (450) in the working direction (L) there are in series a second cutting station (420, 520) and at least a third cutting station (430).

2. Apparatus (4000, 4100, 5000) as in claim 1, **characterized in that** it comprises a control unit (490) configured to control and command each cutting station (410, 510; 420, 520; 430) to perform overall a number of cutting operations "1" on each sheet (50) in accordance with an overall cutting pattern of the sheet (50) which includes a plurality "m" of cutting operations performed in the first cutting station (410, 510) and a plurality "n" of cutting operations performed overall in the second (420, 520) and in the at least third cutting station (430), wherein the sum of "m" and "n" is equal to "1".

3. Apparatus (4000, 4100, 5000) as in claim 2, **characterized in that** the control unit (490) is configured to divide the number of cutting operations "1" so as to optimize a difference between an execution time of the "m" cutting operations performed in the first cutting station (410, 510) on a specific sheet (50) and an execution time required to perform overall the "n" cutting operations on panels deriving from said specific sheet (50) in the second (420, 520) and in the at least third cutting station (430).

4. Apparatus (4000, 4100, 5000) as in claim 2 or 3, **characterized in that** the control unit (490) is configured to command and control the second (420, 520) and at least third cutting station (430) to perform a number "p" of cutting operations in the second cutting station (420, 520) and to perform a number "q" of cutting operations in the at least third cutting station (430), wherein the sum of the number of cutting operations "p" and "q" is equal to the number of cutting operations "n".

5. Apparatus (4000, 4100, 5000) as in claim 4, **characterized in that** the control unit (490) is configured to divide the number of cutting operations "n" in such a way as to optimize a difference between a specific cycle time for performing the "p" cutting operations of the second cutting station (420, 520) and a specific cycle time for performing the "q" cutting operations of the at least third cutting station (430).

6. Apparatus (4000, 4100, 5000) as in any claim from 2 to 5, **characterized in that** said control unit (490) is configured to simultaneously consider, in addition to cutting operations associated with the cutting pattern of a single sheet (50), also cutting operations derived from a plurality of cutting patterns derived respectively from a succession of sheets (50), forming part of a larger production plan, in order to optimize the overall cycle time of the cutting stations (410, 510; 420, 520; 430).

7. Apparatus (4000, 4100, 5000) as in any claim from 2 to 6, **characterized in that** said control unit (490) is configured to define a sequence of sheets (50), forming part of a larger production plan, in particular defining an order in which the sheets forming part of a production plan are processed, in order to optimize the overall cycle time of the cutting stations (410, 510; 420, 520; 430).

8. Apparatus (4000, 4100, 5000) as in any claim hereinbefore, **characterized in that** each cutting station (410, 510, 420, 520, 430) comprises cutting means (411, 511, 421, 521, 431, 433) configured to perform cutting operations in respective cutting directions (T, S, S').

9. Apparatus (4000, 4100, 5000) as in claim 8, **characterized in that** the cutting means of said at least a third cutting station (430) comprise at least two cutting devices (431, 433) disposed and configured to operate in parallel with each other according to a flow of panels to be cut.

10. Apparatus as in claim 9 when directly or indirectly also dependent on claim 2, **characterized in that** the control unit (490) is configured to command and control the two cutting devices (431, 433) to perform in parallel a number "r" of cutting operations in a first cutting device (431) and a number "s" of cutting operations in a second cutting device (432), wherein the sum of the number of cutting operations "r" and "s" is equal to the number of cutting operations "q", wherein the control unit (490) is configured to divide the number of cutting operations "q" in such a way as to optimize a difference between a specific cycle time for performing the "r" cutting operations of the first cutting device (431) and a specific cycle time for performing the "s" cutting operations of the second cutting device (432).

11. Apparatus (4000, 4100, 5000) as in claim 8, 9 or 10, **characterized in that** the cutting means (421, 521, 431, 433) are configured to define a cutting direction (T, S, S') in each cutting station (410, 510, 420, 520, 430) which is a predetermined and constant cutting direction for that station, in particular with respect to the working direction (L) and the angular position assumed by the sheet (50) or by the panels obtained from such sheet (50) in the respective station.

12. Apparatus (4000, 4100, 5000) as in claim 11, **characterized in that** at least in the first (410, 510) and in the second cutting station (420, 520) the predetermined and constant cutting direction is a cutting direction (T) transverse, in particular orthogonal, to the working direction (L), and in the third cutting station (430) the predetermined and constant cutting direction is a cutting direction (S) parallel to the working direction (L) or a cutting direction (S') transverse, in particular orthogonal, to the working direction (L).

13. Apparatus (5000) as in any claim hereinbefore, **characterized in that** said apparatus (5000) comprises a shuttle (550) configured mobile to transport, in a translation direction (M) transverse to the working direction (L), panels to be cut from the second cutting station (520) toward said at least third cutting station (430), said shuttle (550) being provided with one or more housing compartments (552) to receive and transport said panels, wherein said shuttle (550) is also configured to rotate in such a way as to dispose panels in a horizontal position and, furthermore, is configured to translate vertically in such a way as to selectively position the compartments (552) at a height coordinated with a work plane of cutting means (431, 433) of said at least third cutting station (430).

14. Apparatus (5000) as in any claim hereinbefore, **characterized in that** said apparatus (5000) is configured to perform all or some of the cutting operations provided by said cutting pattern with said sheet (50) disposed on a horizontal rest plane and/or with said sheet (50) disposed on a rest plane inclined with respect to the vertical, in particular with an inclination with respect to the vertical of between 3° and 15°.

15. Method for cutting sheets of glass, or other glass substitute materials, **characterized in that** said method comprises performing, in a working direction (L), a first step of cutting a sheet (50) in a first cutting station (410, 510), rotating, in their rest plane, panels obtained from the cut sheet (50), modifying an angular position thereof with respect to the working direction (L), downstream of the rotation performing in series in the working direction (L) a second cutting step and at least a third cutting step in a second cutting station (420, 520) and in at least a third cutting station (430), respectively.

16. Method as in claim 15, **characterized in that** it comprises performing overall a number of cutting operations "1" on each sheet (50) in accordance with an overall cutting pattern of the sheet (50) which includes a plurality "m" of cutting operations performed in the first cutting station (410, 510) and a plurality "n" of cutting operations performed overall in the second (420, 520) and in the at least third cutting station (430), wherein the sum of "m" and "n" is equal to "1".

17. Method as in claim 16, **characterized in that** the method divides the number of cutting operations "1" in such a way as to optimize a difference between an execution time of the "m" cutting operations performed in the first cutting station (410, 510) on a specific sheet (50) and an execution time required to perform overall the "n" cutting operations on panels deriving from said specific sheet (50) in the second (420, 520) and in the at least third cutting station (430).

18. Method as in claim 15 or 16, **characterized in that** the method provides to perform a number "p" of cutting operations in the second cutting station (420, 520) and to perform a number "q" of cutting operations in the at least third cutting station (430), wherein the sum of the number of cutting operations "p" and "q" is equal to the number of cutting operations "n".

19. Method as in claim 18, **characterized in that** the method also comprises dividing the number of cutting operations "n" in such a way as to optimize a difference between a specific cycle time for performing the "p" cutting operations of the second cutting station (420, 520) and a specific cycle time for performing the "q" cutting operations of the at least third cutting station (430).

20. Method as in any claim from 15 to 19, **characterized in that** said third cutting step comprises performing cutting operations in parallel with each other on different panels coming from the second cutting step.

21. Method as in claim 20, **characterized in that** the method comprises performing in parallel, in said third cutting step, a number "r" of cutting operations in a first cutting device (431) and a number "s" of cutting operations in a second cutting device (432), wherein the sum of the number of cutting operations "r" and "s" is equal to the number of cutting operations "q", wherein the method divides the number of cutting operations "q" in such a way as to optimize a difference between a specific cycle time for performing the "r" cutting operations of the first cutting device (431) and a specific cycle time for performing the "s" cutting operations of the second cutting device (432).

22. Computer program storable in a computer-readable medium containing the instructions which, when executed by a control unit (490), determine the execution of the method as in any claim from 15 to 21.
